# EUROPEAN PATENT APPLICATION

(11) **EP 2 571 239 A2**
(43) Date of publication of application: **20.03.2013**
(21) Application number: 12176532.5
(22) Date of filing: 16.07.2012
(51) Int. Cl.: H04N 1/00

(54) **Image forming apparatus and control method thereof**

(30) Priority: 19.09.2011 KR 20110094322
(71) Applicant: Samsung Electronics Co., Ltd., Suwon-si, Gyeonggi-do, 443-742 (KR)
(72) Inventor: Chung, In-Hong, Korea (KR); Park, Jea-hong, Korea (KR)
(74) Representative: Misselbrook, Paul

(57) **Abstract**

An image forming apparatus which is connected to at least one host device. The image forming apparatus includes a communication interface unit which communicates with the at least one host device; a user interface (UI) unit which provides information received from the at least one host device; and a control unit which receives information on one or more printable files, among a plurality of files currently being executed by the at least one host device, by accessing the at least one host device in accordance with a user command and provides the received printable file information. The received printable file information can be displayed and printed at the image forming apparatus.

## Description

### CROSS-REFERENCE TO RELATED APPLICATIONS

This application claims priority under 35 U.S.C. § 119(a) from Korean Patent Application No. 2011-94322, filed on September 19, 2011, in the Korean Intellectual Property Office, the contents of which are incorporated herein by reference in its entirety.

### BACKGROUND OF THE INVENTION

### 1. Field of the Invention

The present general inventive concept relates to an image forming apparatus and a control method thereof, and more particularly, to an image forming apparatus equipped with a host access function and a control method of the image forming apparatus.

### 2. Description of the Related Art

A typical host print operation is generally performed unilaterally by transmitting a print job from a host personal computer (PC) to an image forming apparatus so that the image forming apparatus can perform printing.

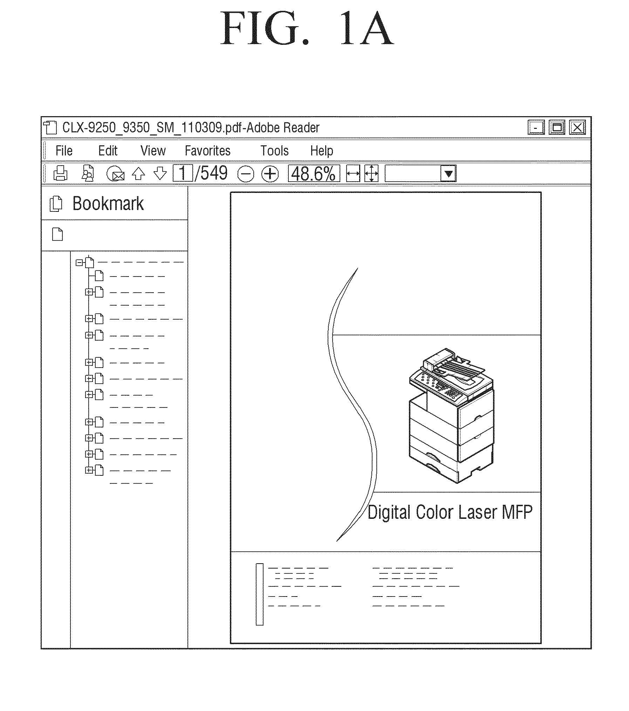

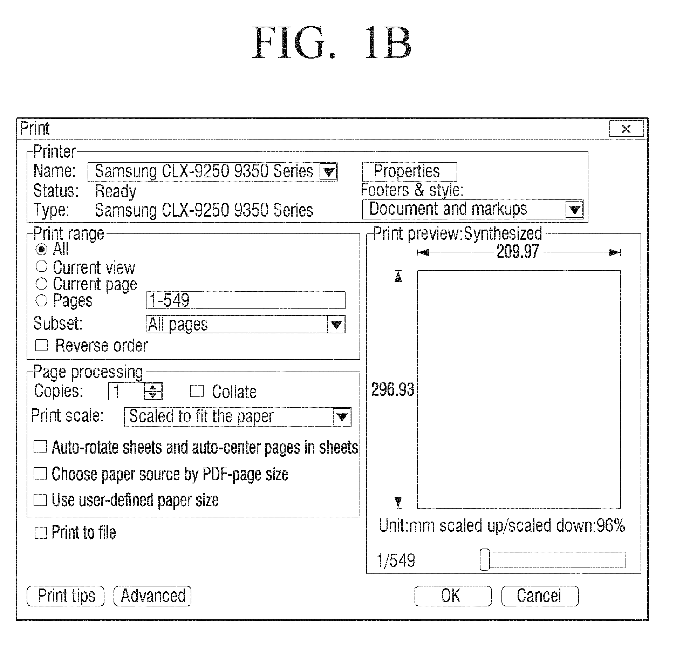

For example, referring to FIGS. 1A and 1B, a user may open a target document to be printed in a host PC in which a printer driver is installed, may then click a 'print' button to select print options for the document, and may then issue a print command. The printer driver generates print image data by converting the target file into a print language, and transmits the print image data to the image forming apparatus for printing. The image forming apparatus may then print the transmitted print image data.

In this example, however, in a case in which the printed print image data is erroneous or the user wishes to print the target file again, the user may need to access the host PC again, which causes inconvenience.

### SUMMARY OF THE INVENTION

The present general inventive concept provides an image forming apparatus capable of accessing a host, acquiring printable file information from the host, and providing the acquired printable file information, and a control method of the image forming apparatus.

Additional features and utilities of the present general inventive concept will be set forth in part in the description which follows and, in part, will be obvious from the description, or may be learned by practice of the general inventive concept.

The foregoing and/or other features and utilities of the present general inventive concept may be achieved by providing an image forming apparatus which is connected to at least one host device, the image forming apparatus including: a communication interface unit which communicates with the host device; a user interface (UI) unit which provides information received from the host device; and a control unit which receives information on one or more printable files, among a plurality of files currently being executed by the host device, by accessing the host device in accordance with a user command and provides the received printable file information.

The control unit may provide the received printable file information as a list. In response to at least one printable file being selected from the list, the control unit may control print data corresponding to the selected printable file to be received.

The image forming apparatus may also include an engine unit which performs printing, wherein, in response to the receipt of the print data via the communication interface unit, the control unit prints the print data by driving the engine unit.

The control unit may provide a user authentication screen for accessing the host device.

The control unit may control the UI unit to provide a user menu for selecting the host device based on at least one of previously-registered host identification (ID) information and searched host ID information.

The control unit may control the print data to be printed ahead of other pending print data in the image forming apparatus.

The foregoing and/or other features and utilities of the present general inventive concept may also be achieved by providing a control method of an image forming apparatus which is connected to at least one host device, the control method including: accessing the host device in accordance with a user command; and receiving information on one or more printable files from the host device, among a plurality of files currently being executed by the host device, and providing the received printable file information.

The providing may include providing the received printable file information as a list and the control method further comprises, in response to at least one printable file being selected from the list, receiving print data corresponding to the selected printable file.

The control method may also include, in response to the receipt of the print data, printing the print data by driving an engine unit.

The control method may also include providing a user authentication screen to access the host device.

The control method may also include providing a user menu to select the host device based on at least one of previously-registered host ID information and searched host ID information.

The control method may also include printing the print data ahead of other pending print data in the image forming apparatus.

The foregoing and/or other features and utilities of the present general inventive concept may also be achieved by providing a non-transient computer-readable recording medium having recorded thereon a control method of an image forming apparatus, the control method including: accessing the host device in accordance with a user command; and receiving information on one or more printable files from the host device, among a plurality of files currently being executed by the host device, and providing the received printable file information.

The providing may include providing the received printable file information as a list and the control method may also include, in response to at least one printable file being selected from the list, receiving print data corresponding to the selected printable file.

The control method may also include, in response to the receipt of the print data, printing the print data by driving an engine unit.

### BRIEF DESCRIPTION OF THE DRAWINGS

These and/or other features and utilities of the present general inventive concept will become apparent and more readily appreciated from the following description of the embodiments, taken in conjunction with the accompanying drawings of which:

FIGS. 1A and 1B are diagrams illustrating a related-art control method of an image forming apparatus;

FIG. 2A is a diagram illustrating an image forming system according to an embodiment of the present inventive concept;

FIG. 2B is a block diagram of an image forming apparatus according to an embodiment of the present inventive concept;

FIGS. 3 and 4A to 4C are diagrams illustrating an example of the operation of an image forming system according to an embodiment of the present inventive concept;

FIGS. 5A to 8C are diagrams illustrating various examples of a user interface (UI); and

FIG. 9 is a flowchart illustrating a control method of an image forming apparatus, according to an embodiment of the present inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

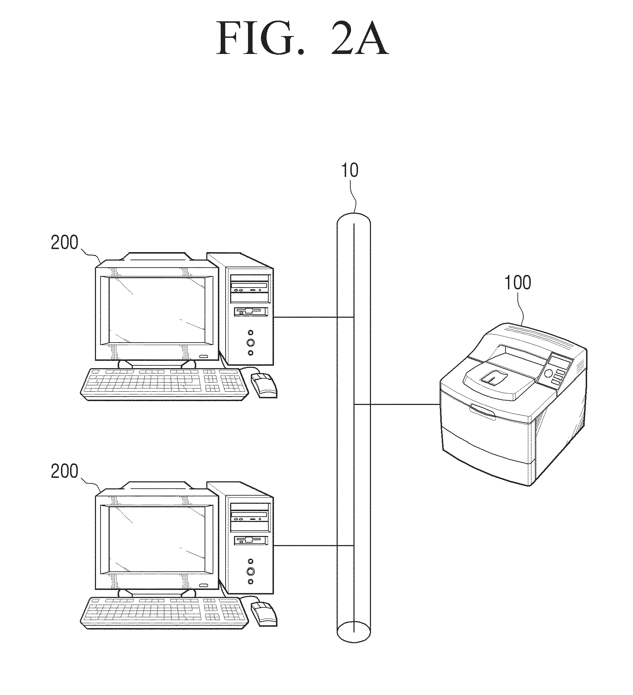

FIG. 2A is a diagram illustrating an image forming system according to an embodiment of the present inventive concept. Referring to FIG. 2A, the image forming system includes an image forming apparatus 100 and a host device 200 that is connected to the image forming apparatus 100 via a network 10.

The image forming apparatus 100 may be implemented as various devices that may be connected to an external device and output document data, such as a printer, a scanner, a copier, a facsimile printer, a multifunctional peripheral (MFP) with at least two of the printer, scanner, copier, and facsimile functions, and the like.

The image forming apparatus 100 may be connected to the host device 200 via the network 10, may receive information on one or more printable files, among the program files currently being executed by the host device 200, and may provide the received information via a user interface (UI) screen. The image forming apparatus 100 may receive data corresponding to a selected printable file, and may print the received data. Receiving information on a printable file by accessing the host device 200 and providing the received information and receiving data corresponding to the printable file and printing the received data will hereinafter be referred to as a 'print from PC' function.

The network 10 may be implemented as a local area network (LAN). In the example illustrated in FIG. 2A, the image forming apparatus 100 and the host device 200 are connected by the network 10. In another non-limiting example, the image forming apparatus 100 and the host device 200 may be connected by a universal serial bus (USB) port.

For example, the host device 200 may be implemented as various types of display devices (for example, a personal computer (PC), a personal digital assistant (PDA), a mobile phone or the like) that can execute printable files with the use of a particular program. In this example, the printable files may include various files such as document files (for example, Word files, PDF files, Excel files, or PowerPoint files) and image files (for example, JPEG files, bitmap files, or tiff files), and the like.

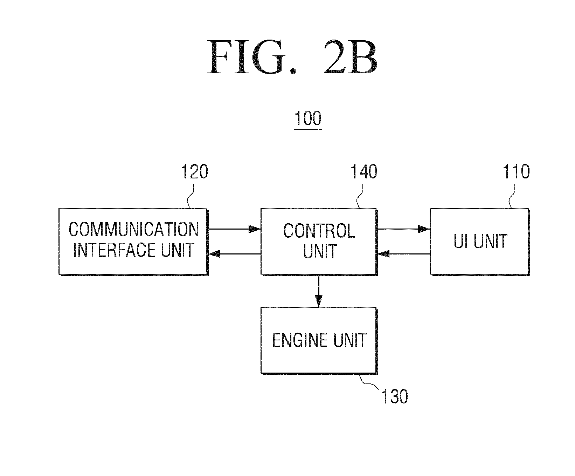

FIG. 2B is a block diagram of an image forming apparatus according to an embodiment of the present inventive concept.

Referring to FIG. 2B, an image forming apparatus 100 includes a communication interface unit 120, a UI unit 110, an engine unit 130, and a control unit 140.

The communication interface unit 120 may communicate with the host device 200 illustrated in FIG. 1.

The communication interface unit 120 may use various types of interfaces such as, for example, a parallel port interface, a serial port interface, a USB interface, a network interface, a local interface, an IEEE 1394 interface, a Bluetooth interface, or the like.

The UI unit 110 may display a menu screen relevant to a variety of functions provided by the image forming apparatus 200, and may receive a user command via the menu screen. For example, the UI unit 120 may be implemented as a touch screen capable of not only receiving a user command but also displaying data.

For example, the UI unit 110 may be implemented as a device into which a display panel and a touch panel are incorporated. In this example, the display panel may be a liquid crystal display (LCD), a cathode-ray tube (CRT), a plasma display panel (PDP), an organic light-emitting diode (OLED), or the like.

The functions of the UI unit 110 may be realized by a device other than the UI unit 120, for example, an input panel (not shown) and a display unit (not shown).

The UI unit 110 may provide information received from the host device 200 in response to the receipt of a user command. The received information may include information on one or more printable files, among a plurality of program files currently being executed by the host device 200. For example, the received information may include information on various files such as document files (for example, Word files, PDF files, Excel files, or PowerPoint files) and image files (for example, JPEG files, bitmap files, or tiff files), and the like. In this example, the received information may include the program names and the file names of the various files.

For example, the host device 200 may transmit information on all the program files currently being executed to the image forming apparatus 100, and the image forming apparatus 100 may extract information on one or more printable ones of the currently-executed program files. In another non-limiting example, the host device 200 may transmit information only on the printable files, among other currently-executed program files, to the image forming apparatus 100.

The UI unit 110 may provide a user setting/registration screen to register a PC and to set an identification (ID)/password in connection with the 'print from PC' function.

The UI unit 110 may provide various UI screens to perform the 'print from PC' function. Examples of the various UI screens will be described later in further detail.

The engine unit 130 may perform various operations such as, for example, printing, scanning, sending faxes, copying, and the like, under the control of the control unit 140. The engine unit 130 may print data present in a storage unit (not shown), and may be configured to include a printing module that may print data transmitted to the printer driver of a host PC, a scan module that may perform image scanning upon the request of a user and may thus be used for sending a fax or performing network or local copying, and a fax module that may transmit an image generated by the image forming apparatus 100 or may receive an incoming fax from an external source.

The control unit 140 may control the general operation of the image forming apparatus 100.

The control unit 140 may access the host device 200 in response to the receipt of a user command via the UI unit 110, and may thus receive information on the program files currently being executed by the host device 200. The control unit 140 may extract information on one or more printable files, among other files currently being executed by the host device 200. For example, the currently-executed program files may include one or more files that are being executed by the host device 200 with the use of a particular program.

For example, the control unit 140 may control the UI unit 110 to provide a list of one or more printable program files currently being executed by the host device 200. !n this example, in response to one of the printable program files being selected from the list, the control unit 140 may control the communication interface unit 120 to receive print data corresponding to the selected printable program file.

In response to the receipt of the print data corresponding to the selected printable program file, the control unit 140 may drive the engine unit 130 to print the received print data. For example, the term 'driving of the engine unit 130' indicates, but is not limited to, supplying driving power to the elements of the engine unit 130 so as to maintain the engine unit 130 in a standby state, and may include driving a developer unit, a laser scanning unit (LSU), a transfer unit, an optical photo conductor (OPC) unit, a charge unit, a cleaning unit, a fixing unit, and the like to maintain the engine unit 130 in a printable state.

In a case in which user authentication is required to access the host device 200, the control unit 140 may control the UI unit 110 to provide a user authentication screen to perform a user authentication. For example, the control unit 140 may control the UI unit 110 to provide a display screen to receive an ID and a password from a user of the UI unit 110.

The control unit 140 may also control the UI unit 110 to provide a user menu to select the host device 200 to be accessed. In this example, the control unit 140 may control the UI unit 110 to provide a user menu to select at least one host device based on at least one of previously-registered host ID information and host ID information searched for in accordance with a user command.

The control unit 140 may control print data received from the host device 200 in accordance with a user command to be printed ahead of other pending print data.

The storage unit may be implemented as a read-only memory (ROM), a random access memory (RAM), or the like. In response to the storage unit being implemented as a ROM, which is a type of nonvolatile memory, various control programs to implement the functions of the image forming apparatus 100 may be stored in the storage unit. For example, data that results from and/or is relevant to the execution of a program by the control unit 130 may be temporarily stored in a RAM, which is a type of volatile memory.

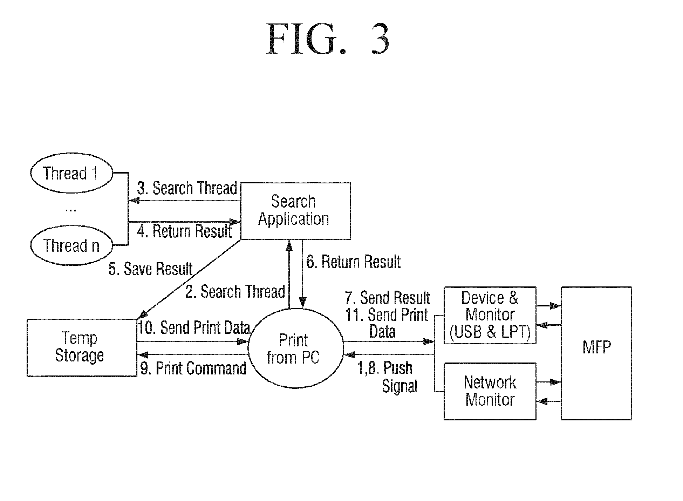

FIG. 3 is a diagram illustrating an operation of an image forming apparatus according to an embodiment of the present inventive concept, for example, an MFP (Multi-Function Peripheral).

Referring to FIG. 3, in response to a 'print from PC' button on the MFP being pressed, a UI screen displaying a list of PCs that can be accessed by the MFP may be provided. For example, since there exists an application (such as a 'scan to manager' application) that can be executed in a background mode after being booted into an operating system (OS) (for example, a Windows or Mac OS), the MFP may continue to be connected to a host PC.

In response to one of the PCs being selected by a user, a determination may be made as to whether the MFP is connected to the selected PC either directly or via a network, and the MFP may transmit a signal to the selected PC based on the results of the determination (1. Push Signal).

In response to the receipt of the signal transmitted by the MFP, a 'print from PC' application may transmit a command to search for threads that are currently being executed in the OS of the PC to a search application (2. Search Thread).

The search application may search for one or more processors that are currently being executed in the OS, and may return information regarding the one or more printable processors among other currently-executed processors. For example, in the case of the Windows OS, a list of processors currently being executed may be acquired using an EnumWindows function of a Win 32 application programming interface (API), which is provided by Microsoft (3. Search Thread & 4. Return Result).

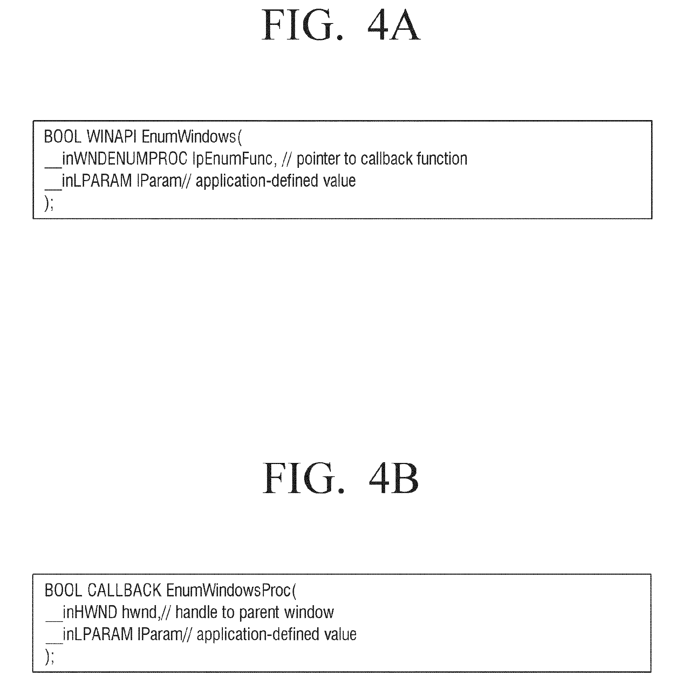

FIG. 4A illustrates the syntax of the EnumWindows function. Referring to FIG. 4A, the EnumWindows function is a function to search for window handles so as to help a user identify windows. In a case in which a callback function, which is a first factor inserted into the EnumWindows function, returns 'false' or finishes searching for all windows, the EnumWindows function may return 'false,' and may then be completed.

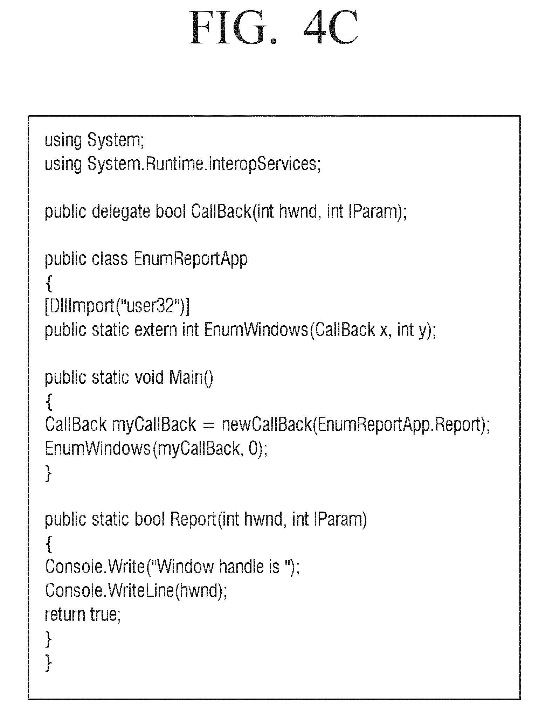

FIG. 4B illustrates the syntax of EnumWindows Proc, which is a callback function that may be executed in response to the detection of a window by the EnumWindows function, and FIG. 4C illustrates an example of a program used by the EnumWindows function.

Referring back to FIG. 3, the search application may search the returned information regarding the processors for one or more printable processors, may store the results of the search in a temporary storage, and may return the results of the search to the 'print from PC' application (5. Save Result & 6. Return Result).

The host PC may return the results of the search performed by the search application to a socket via which the signal transmitted by the MFP has been received (7. Send Result). The socket may be open until receiving the results of the search performed by the search application, and may be closed in response to the receipt of the results of the search performed by the search application. The MFP may basically stand by as long as the socket is open. However, in a case in which no search results are received for more than a predefined amount of time, the 'print from PC' application may return a false value so that the MFP may be prevented from remaining indefinitely in a standby mode.

The results of the search performed by the search application may be displayed on a UI screen of the UI unit 110. The user may decide whether to perform printing and to make multiple selections in a case in which the results of the search performed by the search application indicate that there is more than one printable processor. Then, the MFP may allow the user to select print options regarding an input tray, an output tray, a collate function, print quality, a color print option, and the like, and may transmit a print command signal to the host PC (8. Push Signal).

The 'print from PC' application may transmit a print command to the temporary storage in which the results of the search performed by the search application are temporarily stored (9. Print Command).

The temporary storage may set print data in accordance with the print command, and may transmit the print data to the 'print from PC' application (10. Send Print Data).

The 'print from PC' application may transmit the print data to the MFP so that the MFP may execute a print job (11. Send Print Data).

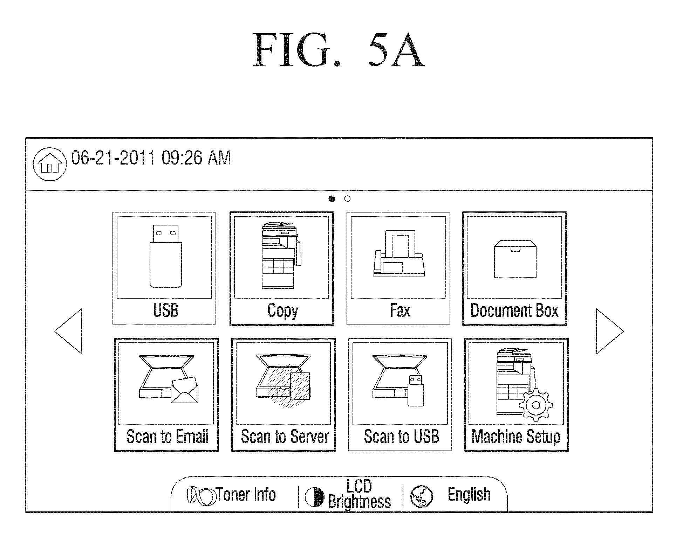

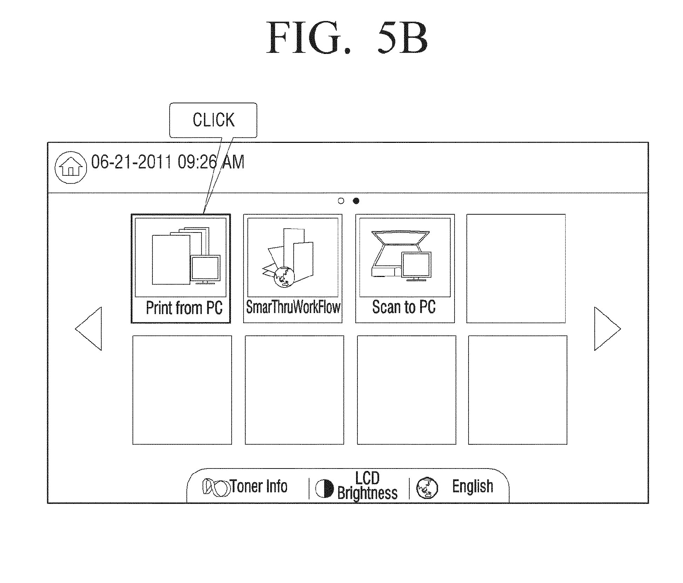

FIGS. 5A and 5B are diagrams illustrating an example of a UI home screen.

Referring to FIGS. 5A and 5B, the UI home screen may display various function menus such as, for example, a 'copy' function, a 'scan to email' function, a 'document box' function, a 'print from PC' function, a 'scan to PC' function, and the like, as button icons. In this example, new button icons may be added to the UI home screen, or some of the existing button icons on the UI home screen may be deleted according to a user setting.

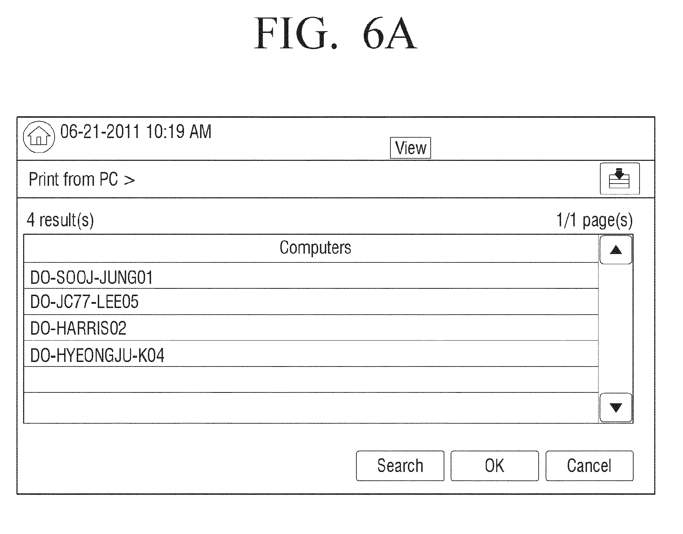

FIGS. 6A to 6C are diagrams illustrating an example of UI screens that may be displayed in response to a particular button icon being selected from the UI home screen illustrated in FIG. 5A or 5B.

Referring to FIG. 6A, in response to a 'print from PC' button being selected from the UI home screen of FIG. 5B, information on one or more PCs in which a driver provided by an image forming apparatus is installed may be provided. For example, a list of PCs that are connected to the given image forming apparatus via a network, a USB port, or a serial port, among other PCs in which the driver provided by the given image forming apparatus is installed, may be displayed.

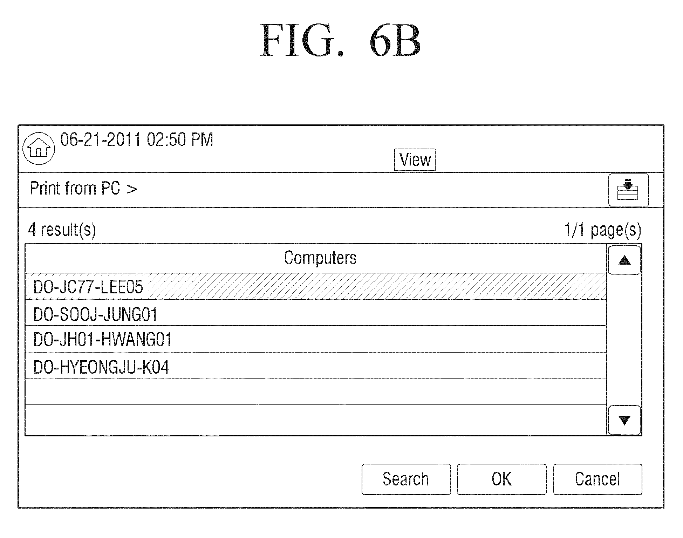

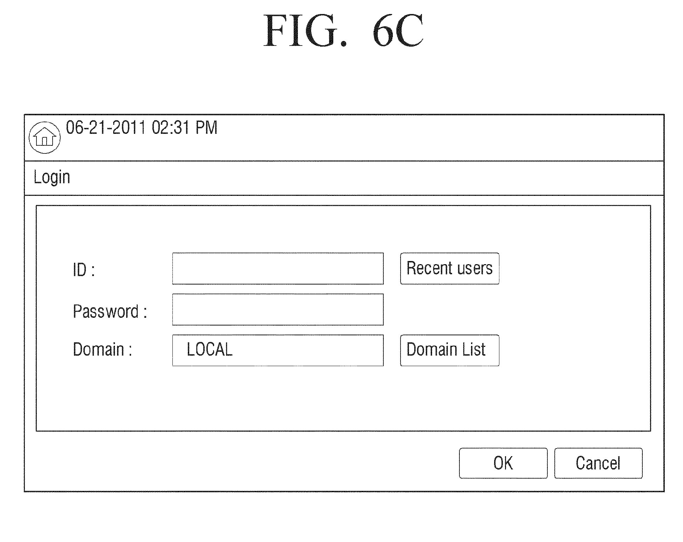

Referring to FIGS. 6B and 6C, in response to one of the PCs being selected from the displayed list, a user authentication screen to access the selected PC may be displayed. For example, a UI screen to receive an ID and a password to access the selected PC may be displayed (see FIG.6C). In a case in which no user authentication is required to access the selected PC, no user authentication screen may be displayed.

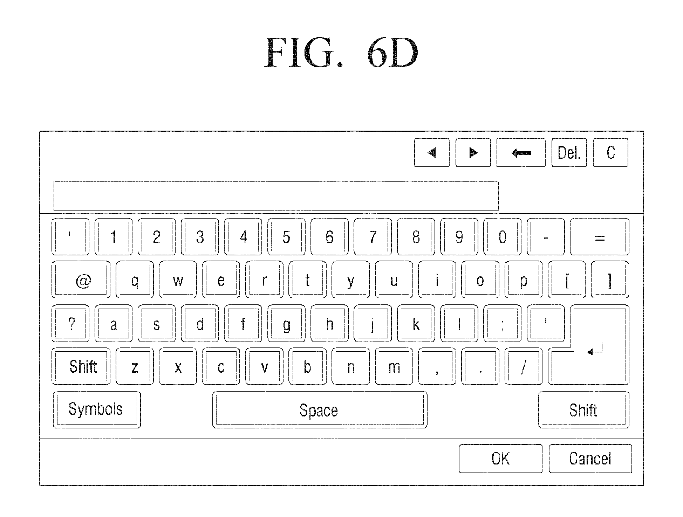

In a case in which information on a desired PC is not displayed on the UI screen illustrated in FIG. 6B, the user may enter information on the desired PC, for example, the internet protocol (IP) address of the desired PC, through the use of a host search function. FIG. 6D illustrates an example of a virtual keyboard screen to enter an IP address in connection with the host search function. The host search function may be executed by using a 'search' button illustrated in FIG. 6B.

A search for a PC may be made by the user by entering the IP address of the PC. In a case in which the PC with the entered IP address is determined to be accessible, a message confirming the entered IP address may be displayed as a popup window. Then, the user may choose whether to access the PC with entered IP address (i.e., select an 'OK' button) or search for a new PC with another IP address (i.e., select a 'retry' button).

In another example, an updated list of connected PCs may be provided by adding the PC with the entered IP address to an existing list of connected PCs, such as that illustrated in FIG. 6B.

Information on the PC with the entered IP address may be stored so that the PC with the entered IP address may be included in a list of connected PCs to be displayed.

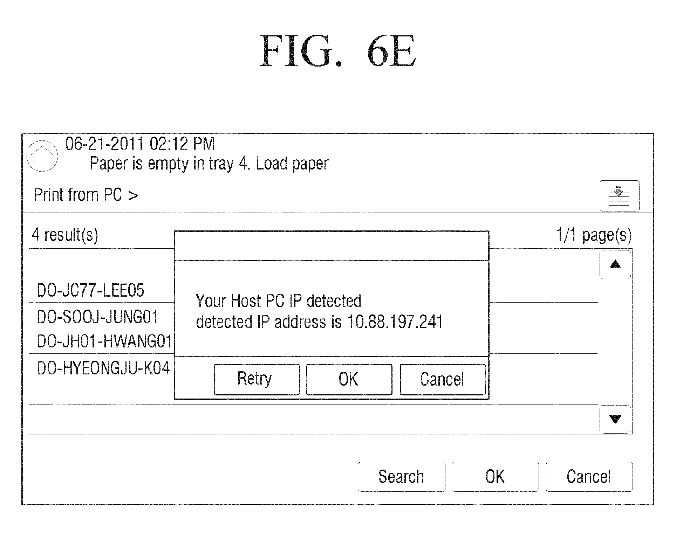

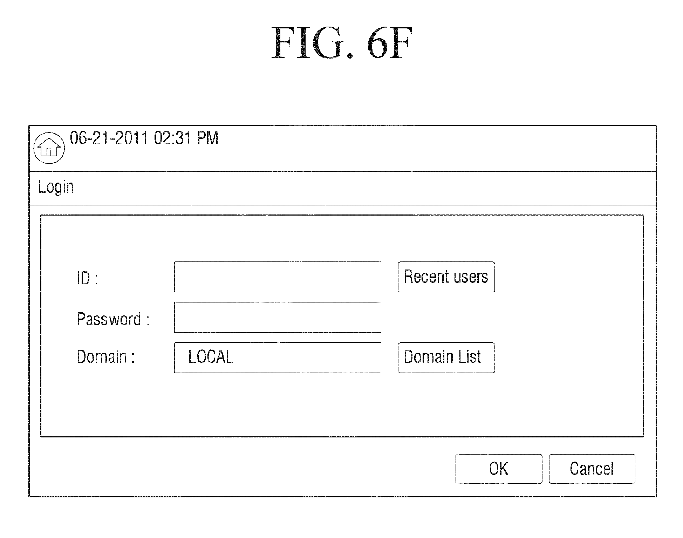

Referring to FIGS. 6E and 6F, in response to the user selecting the entered IP address (i.e., the 'OK' button), a user authentication screen to access the PC with the entered IP address may be displayed. The user authentication screen may be selectively displayed only in a case in which the PC with the entered IP address requires user authentication.

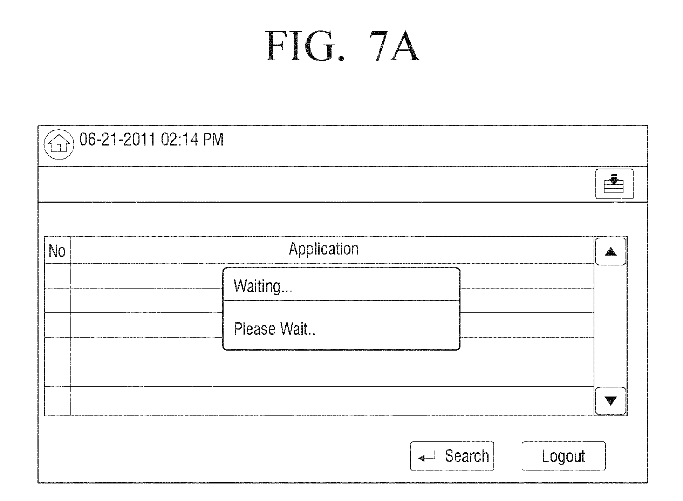

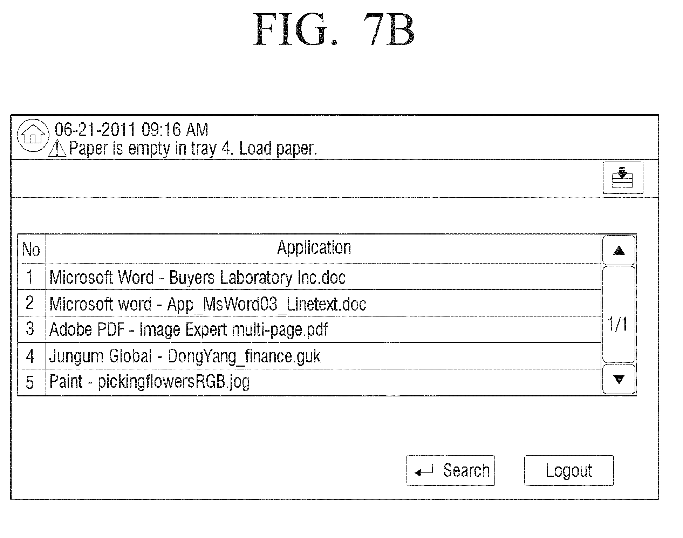

FIGS. 7A and 7B are diagrams illustrating an example of UI screens that may be displayed after accessing a user PC.

More specifically, FIG. 7A illustrates an example of a UI screen that may be displayed during the reception of data by accessing a user PC, and particularly, during the reception of information on one or more printable files among a plurality of program files currently being executed by the user PC.

Referring to FIG. 7A, the driver of the user PC may read a list of threads currently being executed in an OS, and may transmit information on one or more printable threads, among other currently-executed threads, to an image forming apparatus. For example, in the case of the Windows OS, a list of processors currently being executed may be obtained using the EnumWindows function of a Win32 API. In this example, one or more printable processors (for example, document files, such as Microsoft's Word or Excel files, and image files, such as JPEG or bitmap files) may be selected from among the currently-executed processors, and the selected printable processors may be transmitted to the given image forming apparatus. In another example, in the case of a Linux OS, a 'ps -ef' command may be entered so that a list of process IDs respectively corresponding to processors currently being executed in the user PC may be provided. Then, one or more printable processors, for example, an OpenOffice processor, an image viewer processor, or the like, may be identified from the listed processors, and the identified printable processors may be transmitted to the given image forming apparatus.

FIG. 7B illustrates a UI screen that displays information on a plurality of printable files that are selected from among the currently-executed program files received from the user PC. Referring to FIG. 7B, a list including information on each of the printable files may be displayed. For example, the printable file information may include the program names and/or the file names of the printable files, but there is no restriction to the type of information that may be displayed as the printable file information. That is, various types of information other than those set forth herein may be displayed as the printable file information as long as it can identify each of the printable files.

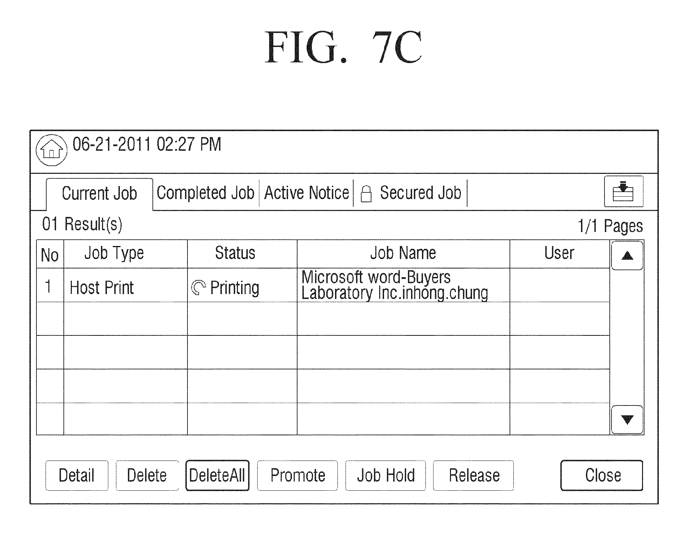

FIG. 7C illustrates an example of a UI screen that may be displayed in response to one of the printable files displayed on the UI screen of FIG. 7B being selected.

Referring to FIG. 7C, in response to one of the printable files displayed on the UI screen of FIG. 7B being selected, a UI screen indicating that the selected printable file is being printed may be displayed. In this example, the given image forming apparatus may transmit a print command to the user PC so that the selected printable file may be printed. Then, the user PC may process the print command, and may print the selected printable file.

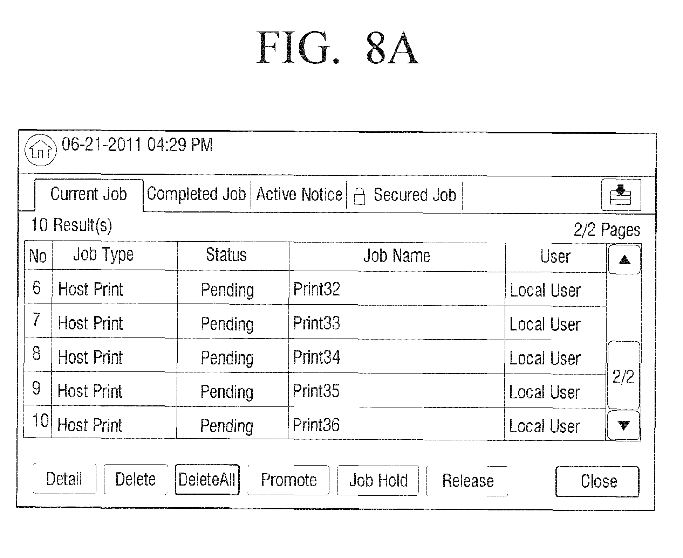

FIGS. 8A to 8C are diagrams illustrating another example of a UI screen.

Referring to FIG. 8A, in a case in which there is a PC from which print data is yet to be received, among a plurality of PCs that are connected to an image forming apparatus, the 'job name' and 'user' sections of an entry for the PC in a print job list may be marked as 'unknown.'

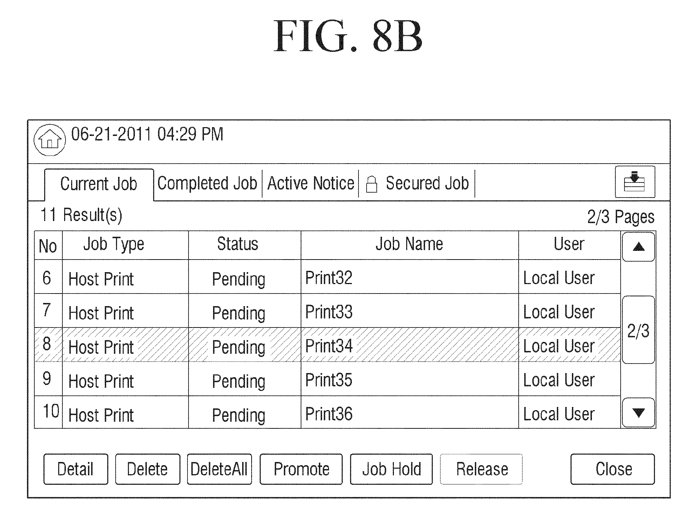

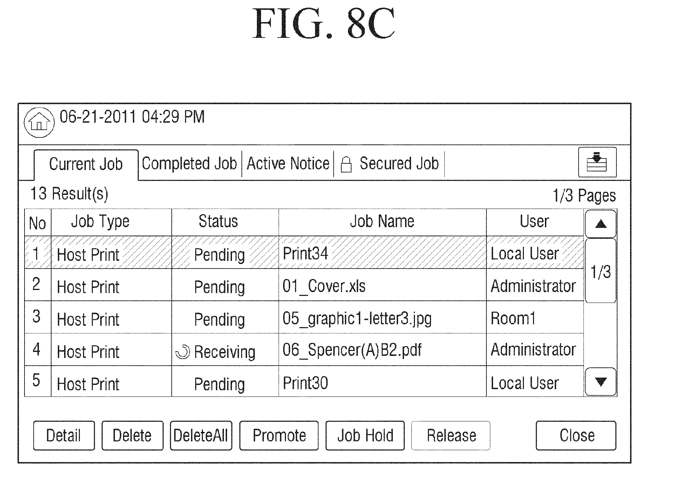

Referring to FIG. 8B, to perform a particular print job regardless of the order between a plurality of pending print jobs, the user may transmit a print command by accessing a PC corresponding to the particular print job. In this example, even if print data corresponding to the particular print job is yet to be received from the PC corresponding to the particular print job, PC information of the corresponding PC and the job name of the particular print job may be already known from the print job list. Accordingly, the particular print job may be placed at the top of the print job list and may thus be prioritized over other pending print jobs, as shown in FIG. 8C.

According to the example illustrated in FIGS. 8A to 8C, it is possible for a user to perform a particular print job ahead of other pending print jobs by preparing for the particular print job with a user PC and accessing the user PC from an image forming apparatus to transmit a print command to the user PC.

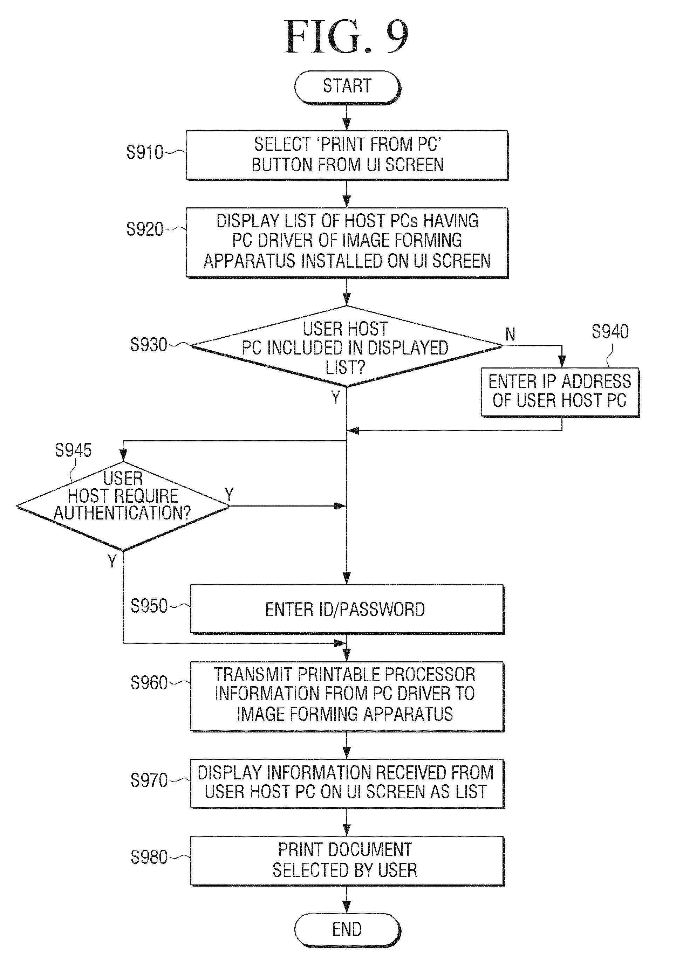

FIG. 9 is a flowchart illustrating a control method of an image forming apparatus, according to an embodiment of the present inventive concept.

Referring to FIG. 9, to execute a 'print from PC' function, which involves accessing a PC, selecting a print job by accessing a PC from an image forming apparatus, and performing the selected print job, a 'print from PC' button to access a user host PC may be selected from a GUI portal home screen (S910).

A UI screen displaying a list of host PCs that are connected to the image forming apparatus via a network or a USB port may be displayed (S920). In this case, if a driver provided along with the image forming apparatus is installed in the user host PC and the image forming apparatus is chosen to be network- or USB-connected to the user host PC, the client IP address of the image forming apparatus may be connected to the user host PC so that the user host PC may be displayed on a 'print from PC' screen.

In a case in which the user host PC is displayed on the UI screen (S930:Y), the user host PC may be selected. On the other hand, in a case in which the user host PC is not displayed on the UI screen (S930:N), the user host PC may be searched for by entering the IP address of the user host PC (S940).

In a case in which the user host PC requires user authentication(S945), the user host PC may be accessed by entering an ID/password into a user authentication screen (S950).

In response to the user host PC being accessed, a PC print driver of the user host PC may transmit information on one or more processors currently being executed by the user host PC to the image forming apparatus (S960).

The image forming apparatus may display the information provided by the user host PC as a list (S970). For example, the image forming apparatus may display a list of one or more printable processors, among other processors currently being executed by the user host PC. In this example, the printable processors may include document files, such as Microsoft's Word or Excel files, and image files, such as JPEG, bitmap, or tiff files.

A file selected by a user may be printed (S980). For example, in response to the user selecting a desired print job from the UI screen and pressing a 'print' button, information on the selected print job may be transmitted from the image forming apparatus to the user host PC so that the selected print job may be performed.

In a case in which the user performs other print jobs other than the selected print job, the control method may return to S910. In a case in which no print data is required by the user host PC, a remote connection between the user host PC and the image forming apparatus may be terminated.

As described above, it is possible to remote-access a user host PC with an image forming apparatus and issue a print command to the user host PC.

In addition, it is possible to perform a particular print job ahead of other pending print jobs by using an image forming apparatus that is shared by multiple users. That is, a user may select a particular print job by accessing his or her PC from the image forming apparatus and may thus enable the selected print job to be performed ahead of other pending print jobs.

Moreover, it is possible to search for and output any printable documents by accessing a server shared between multiple users.

The processes, functions, methods, and/or software described herein may be recorded, stored, or fixed in one or more computer-readable storage media that includes program instructions to be implemented by a computer to cause a processor to execute or perform the program instructions. The media may also include, alone or in combination with the program instructions, data files, data structures, and the like. The media and program instructions may be those specially designed and constructed, or they may be of the kind well-known and available to those having skill in the computer software arts. Examples of computer-readable storage media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules that are recorded, stored, or fixed in one or more computer-readable storage media, in order to perform the operations and methods described above, or vice versa. In addition, a computer-readable storage medium may be distributed among computer systems connected through a network and computer-readable codes or program instructions may be stored and executed in a decentralized manner.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. An image forming apparatus which is connected to at least one host device, the image forming apparatus comprising:
a communication interface unit which communicates with the host device;
a user interface (UI) unit which provides information received from the host device; and
a control unit which receives information on one or more printable files, among a plurality of files currently being executed by the host device, by accessing the host device in accordance with a user command and provides the received printable file information.

2. The image forming apparatus as claimed in claim 1, wherein the control unit provides the received printable file information as a list and, in response to at least one printable file being selected from the list, controls print data corresponding to the selected printable file to be received.

3. The image forming apparatus as claimed in claim 2, further comprising:
an engine unit which performs printing,
wherein, in response to the receipt of the print data via the communication interface unit, the control unit prints the print data by driving the engine unit.

4. The image forming apparatus as claimed in any one of claims 1 to 3, wherein the control unit provides a user authentication screen for accessing the host device.

5. The image forming apparatus as claimed in any one of claims 1 to 4, wherein the control unit controls the UI unit to provide a user menu for selecting the host device based on at least one of previously-registered host identification (ID) information and searched host ID information.

6. The image forming apparatus as claimed in any one of claims 2 to 3, wherein the control unit controls the print data to be printed ahead of other pending print data in the image forming apparatus.

7. A control method of an image forming apparatus which is connected to at least one host device, the control method comprising:
accessing the host device in accordance with a user command; and
receiving information on one or more printable files, among a plurality of files currently being executed by the host device, and providing the received printable file information.

8. The control method as claimed in claim 7, wherein the providing comprises providing the received printable file information as a list and the control method further comprises, in response to at least one printable file being selected from the list, receiving print data corresponding to the selected printable file.

9. The control method as claimed in claim 8, further comprising:
in response to the receipt of the print data, printing the print data by driving an engine unit.

10. The control method as claimed in any one of claims 7 to 9, further comprising:
providing a user authentication screen for accessing the host device.

11. The control method as claimed in any one of claims 7 to 10, further comprising:
providing a user menu for selecting the host device based on at least one of previously-registered host IDinformation and searched host ID information.

12. The control method as claimed in any one of claims 8 to 9, further comprising:
printing the print data ahead of other pending print data in the image forming apparatus.

13. A non-transient computer-readable recording medium having recorded thereon a control method of an image forming apparatus, the control method comprising:
accessing the host device in accordance with a user command; and
receiving information on one or more printable files, among a plurality of files currently being executed by the host device, and providing the received printable file information.

14. The computer-readable recording medium as claimed in claim 13, wherein the providing comprises providing the received printable file information as a list and the control method further comprises, in response to at least one printable file being selected from the list, receiving print data corresponding to the selected printable file.

15. The computer-readable recording medium as claimed in any one of claims 13 to 14, wherein the control method further comprises, in response to the receipt of the print data, printing the print data by driving an engine unit.
